# EUROPEAN PATENT APPLICATION

(11) **EP 0 814 623 A2**
(43) Date of publication of application: **29.12.1997**
(21) Application number: 97109780.3
(22) Date of filing: 16.06.1997
(51) Int. Cl.: H04Q 7/22, H04L 12/28, H04L 12/66, H04L 29/06

(54) **Mobile decision methodology for accessing multiple wireless data networks**

(30) Priority: 18.06.1996 US 664609
(71) Applicant: AT&T Corp., New York, NY 10013-2412 (US)
(72) Inventor: Durant, Gregory M., Union, New Jersey 07063 (US); Russell, Jesse Eugene, Piscataway, New Jersey 08854 (US); Schroeder, Robert Edward, Montville, New Jersey 07045 (US); Wallace, Edward L., South Orange, New Jersey 07079 (US)
(74) Representative: KUHNEN, WACKER & PARTNER

(57) **Abstract**

The present invention encompasses an apparatus and method for a wireless communications device to choose the optimum wireless data network from a plurality of network choices. The wireless communications device employs a protocol converter to convert out-bound data messages to a format usable by the wireless data network chosen and convert in-bound data messages to the original format usable by the wireless communications device. Based upon radio frequency measurements from a plurality of wireless data networks in the current coverage area, the protocol converter will instruct the wireless communications device to communicate on wireless data network with strongest radio signal strength indicator or a user-preferred wireless data network where the minimum radio signal strength indicator requirement has been met. For end-user terminal transmission of data messages, the protocol converter will perform conversion of data messages to the current wireless data network and then transmit the data messages via radio frequency transmission to the wireless network s base station. Also, upon reception of data messages via radio frequency transmission from the fixed-end terminal, the protocol converter will perform necessary conversion of data messages to the format usable by an end processor of the wireless communications device.

## Description

### Field Of The Invention

This invention relates to the field of wireless communications, and more particularly to the field of mobile communications over multiple wireless data networks.

### Background Of The Invention

Presently, a wireless communications device user is limited by the single wireless data network the user s wireless communications device will support. When traveling outside of radio frequency (RF) coverage for that wireless data network, the user is normally left with no viable alternative wireless communications means. A similar problem occurs during busy traffic hours when the single wireless data network cannot handle any more users. Also currently, the wireless communications device user cannot communicate with a fixed communications device of a different network or another wireless communications device that is using a different wireless data network interface protocol. The moving end user is limited to communicating with other communications devices that are using the same wireless data network interface protocol that the moving end user is currently using. Therefore, the moving end user is effectively isolated from users on different data networks. Accordingly, there is a need for enabling moving end users to communicate over multiple wireless data network protocols.

### Summary Of The Invention

The present invention encompasses a method and apparatus for a wireless communications device to choose the optimum wireless data network from a plurality of network choices and convert out-bound data packets to a format usable by the wireless data network chosen and convert in-bound data packets to a format usable by the wireless communications device end processor. A protocol converter performs network protocol conversion of data messages in-bound and data messages out-bound at the wireless communications device. Based upon radio frequency (RF) measurements from a plurality of wireless data networks in the current coverage area, the protocol converter instructs the wireless communications device to communicate on a wireless data network with the strongest radio signal strength indicator (RSSI) or a user-preferred wireless data network where a minimum RSSI requirement has been met. For transmission to an end-user terminal or a fixed communications device, the protocol converter performs conversion of packet data to the current wireless data network and then transmits the packet data via RF to a wireless network base station. Also, upon reception of the packet data via RF from a fixed communications device or fixed end-terminal, the protocol converter performs necessary conversion of the packet data to a format usable by the wireless communications device s end-processor.

### Brief Description Of The Drawings

A more complete understanding of the present invention may be obtained from consideration of the following description in conjunction with the drawings in which:
FIG. 1 is a block diagram showing the overall system architecture in an end-to-end multiple network wireless data communications system.
FIG. 2 is a block diagram of the internal structure of a router in accord with the present invention.
FIG. 3 is a block diagram showing the internal structure of a protocol converter in accord with the present invention.
FIG. 4 is a diagram showing process of protocol conversion in accord with the present invention.

### Detailed Description

Presently, a moving-end user cannot communicate over more than one wireless data network. For example, a cellular digital packet data (CDPD) user is forced to only communicate over the CDPD wireless data network and is therefore isolated from other users on a different network. The present invention solves this limitation by allowing the moving-end users the flexibility to choose from a plurality of different wireless data networks to perform wireless communications.

The present invention facilitates communication over a plurality of different wireless data networks through multiple capabilities including: determining the best wireless data network to access by comparing radio frequency (RF) signal strength measurements from different wireless data networks; performing necessary protocol conversion of data messages outbound from the wireless communications device, to a format usable by the air-interface protocol of the selected wireless data network; performing necessary protocol conversion of data messages in-bound to the wireless communications device, from the selected wireless data network, to a format usable by the end-processor of the moving-end device; and performing actual routing of data messages to either the end-processor if in-bound messages are being received, or to the network RF modem for radio transmission to the selected wireless data network if out-bound messages are being transmitted.

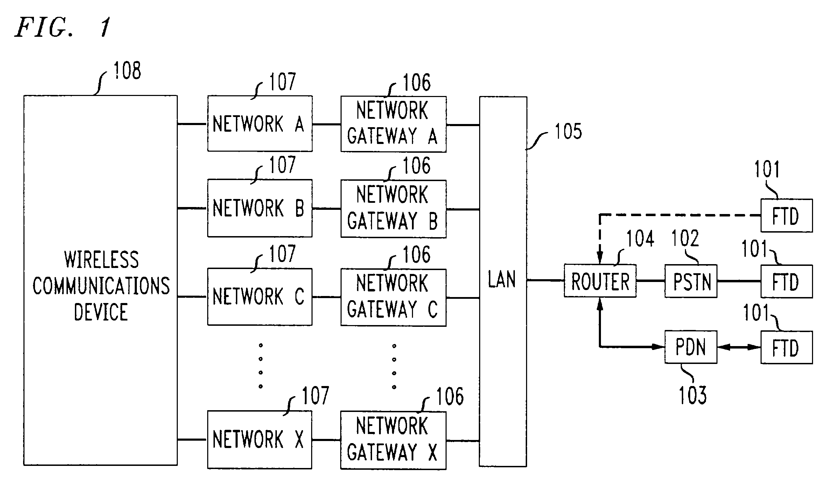

The overall system architecture for facilitating wireless data communications across multiple networks is shown in FIG. 1. At the fixed network side, a fixed communications device (FTD) 101 is wired to a router 104. A plurality of wired connection options exist for connecting the fixed communications device with the router. FIG. 1 shows the example of using a Public Switched Telephone Network (PSTN) connection with an Integrated Services Digital Network (ISDN) interface. The wired connection between both the PSTN 102 and the fixed communications device 101 and the router 104 and PSTN 102 comprises an ISDN basic rate interface line (B-channel) whose operation and structure is well known to those skilled in the art and, therefore, the operation and structure thereof need not be described in detail. A fixed communications device comprises any communications device that is not mobile. At the wireless network side a wireless communications device 108 is capable of transmitting across several networks A, B, C to X 107 usable by the wireless communications device 108. The networks 107 are coupled to associated network gateways A, B, C to X 106 which convert the wireless transmitted information from device 108 to protocols used by the local area network 105 (LAN). The LAN 105 is interconnected to the wired network including the fixed communications device 101.

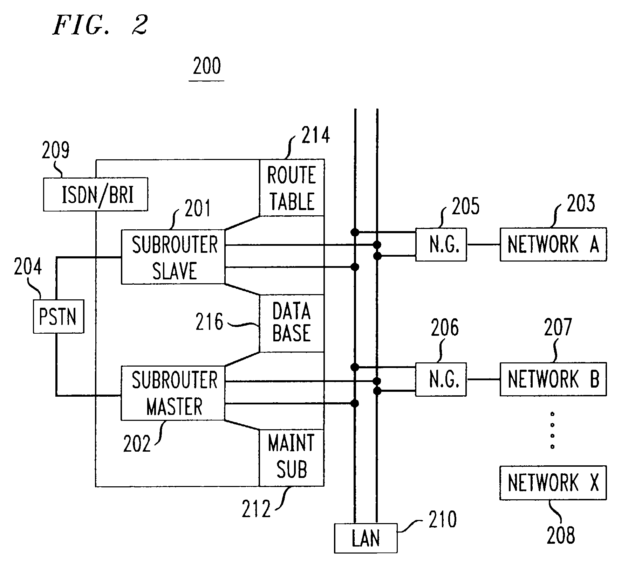

The router architecture 200 as shown in FIG. 2 comprises two sub- routers, a master 202 and a slave 201, which both perform the dual function of converting and routing data messages across multiple wireless data networks. The sub- routers 201 and 202 are coupled to the fixed communications network shown as a PSTN 204 and coupled to the local area network 210 which is interconnected to the network gateways 205 and 206. The network gateways 205, 206 convert information from the protocols used by the fixed network, such as the PSTN, to protocols used by the wireless networks 203, 207 and 208 which carry wireless transmissions to and from the wireless communications device. The router is shown with a basic rate interface 209 to the PSTN network side. Data messages in-bound from a wireless communications device across the multiple wireless data networks will be converted by the router from the wireless data network protocol (if needed) to the wireless data network protocol usable by a fixed communications device. After conversion, the router will rout the data message to the network address of the fixed communications device.

A data message out-bound from the fixed communications device across multiple wireless data networks will be converted (if needed) by the router from the network protocol used by the network containing the fixed communications device to the wireless data network protocol usable by the destination wireless communications device. After conversion, the router will rout the data message through a network gateway 205, 206 to the network address of a destination wireless communications device. The router further includes a maintenance subsystem 212 for performing fault recovery, redundancy, traffic measurement, and diagnostics. If any system fault occurs within one of the sub-routers, traffic can be automatically diverted to the other sub-router. A current routing table 214 is maintained and routinely updated when the network address changes for any message received from the network 203, 207, 208.

Once it is determined which network 203, 207, 208 a data message came from, the routing table 214 is updated. Any new message sent to the network is routed using the correct message format and to the correct address by retrieving the receiver s location from the routing table. A mobile database 216 is maintained for every active wireless communications device by storing a user profile for every active mobile user. Every message received by the router 200 is monitored (through user data received) to determine if it is the correct message type and any invalid message types are discarded. All messages received by the router are authenticated by monitoring a user identification (ID) and a source network address in the data message. Once received by the appropriate destination network control center (not shown), the data message will be routed through a destination network to a destination base station where the wireless communications device is currently being provided wireless access and/or registered. At the base station, the data message is transmitted via radio frequency (RF) transmission to a wireless communication device and received by the protocol converter of the wireless communications device in accord with the present invention.

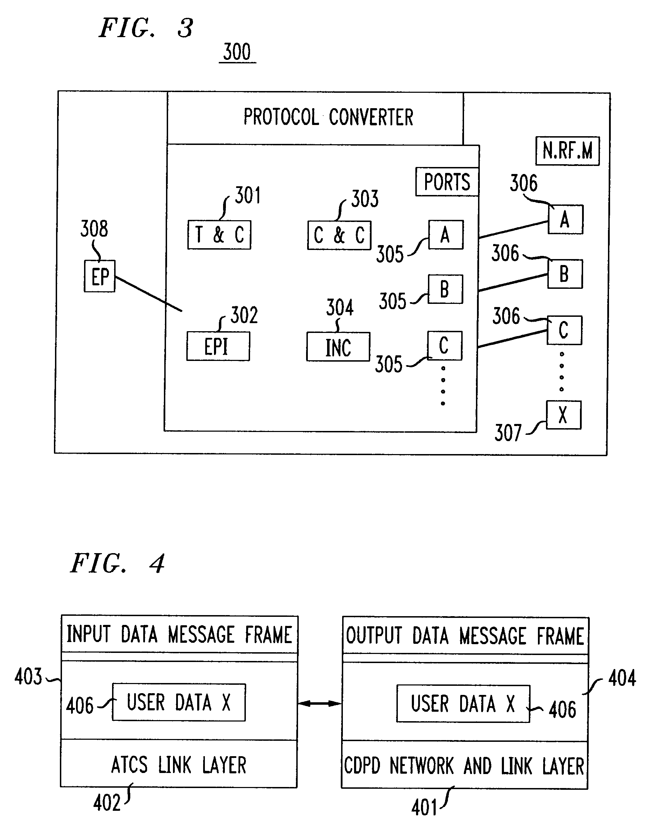

The internal system architecture of the protocol converter 300 associated with a wireless device is shown in FIG. 3. The functional blocks of the protocol converter 300 include timing and control (T&C) 301, end processor interface (EPI) 302, configuration and control (C&C) 303, and inter network control (INC) 304, the implementation of which functions would be understood by a person skilled in the art. Internal ports A, B, and C 305 provide interface connections to network radio frequency modems (NRFM) A, B, and C 306. The protocol converter includes x number of ports for X number of NRFMs 307. The EPI provides interface connection to the end processor (EP) 308 of the wireless communications device.

At the wireless communications device, the data message is received via one of a plurality of different network RF modems 306 the wireless communications device is currently using for wireless communications. The plurality of different network RF modems 306 are connected to the protocol converter which performs functions similar to the router on network side. The choice of which wireless data network to choose for wireless communications is determined by the protocol converter.

The protocol converter 300 of FIG. 3 bases its decision on RF measurements received from a plurality of different wireless data networks in the current coverage area of the wireless communications device. The protocol converter receives these RF measurements via the plurality of different network RF modems 306 that are connected to the protocol converter. The protocol converter can use a plurality of different methods to determine which wireless data network to use for wireless communications. A wireless communications device refers to any wireless communications device capable of transmitting and/or receiving data via radio transmission communications.

One preferred method used by the protocol converter is to compare the received RF measurement with a software controlled (pre-set) minimum RF strength (threshold) for viable wireless communications with that particular wireless data network and choose that particular wireless data network that yields the highest difference between the pre-set RF threshold and the RF measurement taken. After this determination, the configuration and control (C & C) 303 of the protocol converter will request wireless communications be performed over the selected wireless data network via the wired connection with the end processor 303 of the wireless communications device and the selected one of the plurality of network RF modems 306. Also, the protocol converter will inform the router at the network side via RF which wireless data network the protocol converter has chosen for wireless communications. Therefore, subsequent data messages in-bound to the wireless communications device will be routed to the correct wireless data network. After the request is made, the protocol converter performs the dual function of: converting data messages in-bound and out-bound to the requested wireless data network protocol and, routing the converted data message.

A data message out-bound from the wireless communications device is converted by the protocol converter 300 from the network protocol usable by the end processor 308 of the wireless communications device to the requested network air-interface protocol to be used for wireless communications. The converted out-bound message is then routed by the protocol converter to the requested one of a plurality of different wireless network RF modems 306 where it is transmitted via RF to the network base station of requested wireless data network. A data message in-bound to the wireless communications device received from the requested one of a plurality of different wireless network RF modems is converted by the protocol converter 300 from the requested wireless network air-interface protocol to the network protocol usable by the end-processor of the wireless communications device. The protocol converter then routes the converted data message to the end processor of the wireless communications device.

An alternate preferred method is used by the protocol converter for determining which wireless data network to use for wireless communications in which The protocol converter compares the received RF measurement for a pre-set user-preferred wireless data network with the RF threshold for the user-preferred network contained in software. The user-preferred network will be requested unless RF measurement from the user-preferred network is not above RF threshold for user-preferred network. In this case, the protocol converter 300 will select the particular wireless data network that yields the highest difference between the pre-set RF threshold and the RF measurement taken to perform wireless communications. After this determination, the control and configuration 303 of the protocol converter will request wireless communications be performed over the selected wireless data network via a wired connection with the end processor of the wireless communications device and the selected one of the plurality of network RF modems 306. Also, the protocol converter will inform the router at the network side via RF which wireless data network the protocol converter has chosen for wireless communications. Therefore, subsequent data messages in-bound to the wireless communications device will be routed to the correct wireless data network.

After the request is made, the protocol converter will perform the dual function of: converting in-bound and out-bound data messages to the requested wireless data network protocol and, routing the converted data message. A message out-bound from the wireless communications device is converted by the protocol converter from the network protocol usable by the end processor 308 of the wireless communications device to the requested network air-interface protocol to be used for wireless communications. The converted out-bound message is then routed by the protocol converter to the requested one of a plurality of different wireless network RF modems 306 where it is transmitted via RF to the network base station of the requested wireless data network. An in-bound message received from a requested one of a plurality of different wireless network RF modems is converted by the protocol converter from the requested wireless network air-interface protocol to the network protocol usable by the end-processor of the wireless communications device. The protocol converter then routes the converted data message to end processor 308 of the wireless communications device.

The preferred operation of the invention is typified by an example consisting of an automatic train control system (ATCS) fixed communications device and an ATCS wireless communications device currently using the CDPD air-interface network protocol for wireless access. The operation and structure of the elements of a CDPD and ATCS system are well known to those skilled in the art and thus will not be described in great detail.

The protocol converter controller has chosen the CDPD network after RF measurements taken from the CDPD network yielded the highest difference between the RF measurement taken and the pre-set RF threshold for viable CDPD wireless communications from a plurality of differences calculated for each wireless data network in current coverage area. No user-preferred wireless data network has been set and therefore the network (CDPD) yielding highest difference is one chosen. The protocol converter has informed the router via RF which wireless data network the protocol converter has chosen for wireless communications. Therefore, subsequent data messages in-bound to the wireless communications device will be routed to the CDPD wireless data network. The operation and structure of the elements of a CDPD and ATCS system are well known to those skilled in the art and thus will not be described in great detail.

Beginning with a mobile terminated example and referring again to FIG. 2, the fixed communications device routes an ATCS data message to the router 200 via the ISDN (B-channel) basic rate interface (BRI) interface 208. The data message comprises multiple Open System Integration (OSI) layers in which layer 1 is the physical layer where bits are moved across some medium. Once the message is received by the router 200, its user data and header information (i.e., source and destination address, user ID, time-stamp, message type, etc.) is checked to ensure accurate and authenticated transmission. Any message error will be reported to the router maintenance subsystem 212. Routing table 214 and mobile database 216 will be used as a reference to change the ATCS data message to correct destination network format and route the data message to a correct destination address of an active mobile user. The mobile database 216 holds the user profile for every active mobile user. The routing table 214 holds the source network information for a received data message via the network gateway. From these tables, the correct message format and destination address for all out-bound messages can be found and then implemented by the router.

Referring now to FIG. 4 there is shown a block diagram illustrating the process of protocol conversion. For a fixed communications device initiated data transmission, the user data 406 will be extracted from the ATCS frame 403 and put into a CDPD frame 404 that has the necessary CDPD network information 401, as shown in FIG. 4. The converted CDPD data message is then routed through a CDPD gateway to a home CDPD network control center for the wireless communications device. At a home Mobile Data Intermediate System (MD-IS), the CDPD data packet is routed to a Mobil Data Base Station (MDBS) where the destination wireless communications device is currently registered. Once received at the MDBS, the CDPD data message is transmitted via RF to a CDPD RF modem present in the wireless communications device. Once received by the CDPD RF modem, the data packet is again converted to an ATCS data packet usable by the end processor and routed by way of the wired connection to the end processor.

The process is reversed in the opposite direction for a mobile-originated wireless data transmission. In this case, a user-preferred CDPD wireless data network has been set. The CDPD network is chosen by the protocol converter for wireless communications after RF measurements taken from the CDPD network are above the pre-set RF threshold for viable wireless communications with the CDPD network. The protocol converter has informed the router via RF which wireless data network the protocol converter has chosen for wireless communications (CDPD). Therefore, subsequent data messages in-bound to the wireless communications device will be routed to the CDPD wireless data network.

For a mobile-originated wireless data transmission, the end-processor routes the ATCS data message to the protocol converter. Since protocol conversion is needed, the user data 406 is extracted by the protocol converter from the ATCS frame 403 and put into a CDPD frame 404 that has necessary CDPD network information 401. The CDPD frame 404 is then routed by the protocol converter to the CDPD RF modem where it is radio transmitted to the network mobile data base station (MDBS) the wireless communications device is currently using for wireless access. The data packet is then routed to a network mobile data intermediate system (MD-IS) and then to the router. At the router, the data packet is again monitored to ensure authenticated and correct data transmission (i.e., source and destination address, user ID, message type, time stamp, etc.). Any message error will be reported to the router maintenance subsystem. Once authenticated, the user data 406 is extracted by the router from the CDPD frame 404 and placed into an ATCS frame 403 with necessary ATCS network information 402.

Although the invention is described here by using an ATCS-CDPD description, it is clear that it is not limited in scope to these two wireless data networks, but can be applied to a plurality of wireless data networks to enable wireless data communications across a plurality of wireless data network protocols irrespective of the wireless protocol usable by the fixed communications device or the end processor of the wireless communications device. Also, although the invention is described here by using a fixed-to-moving end description, it is clear that it is not limited in scope to wireless communications between a moving end user and a fixed communications device, but can also be applied to communications between two or more moving end users.

Also, although the invention is described using two different methods for determining the optimum wireless data network for performing wireless communications from received RF measurements, it is clear that it is not limited in scope to these two methods, but can be applied to a plurality of different methods to enable wireless data communications across a plurality of different wireless data networks.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the structure may be varied substantially without departing from the spirit of the invention and the exclusive use of all modifications which come within the scope of the appended claim is reserved.

## Claims

1. A method for selecting an optimum wireless data network from a plurality of wireless data networks for communications of a wireless communications device with a second communications device, said method comprising the steps of:
receiving continual radio frequency measurements from each of said plurality of wireless data networks at a protocol converter of said wireless communications device;
CHARACTERIZED BY:
comparing each of said continual radio frequency measurements to a given radio frequency threshold for each of said plurality of wireless data networks; and,
selecting one of said plurality of wireless data networks for wireless communications with said second communications device based on the comparison of said continual radio frequency measurements to said given radio frequency threshold.

2. The method according to claim 1, further including the steps of:
converting out-bound data messages from said wireless communications device to a network protocol of the selected one of said plurality of wireless data networks for wireless communications with said second communications device;
routing said out-bound data messages to the selected one of said plurality of wireless data networks;
converting in-bound data messages to said wireless communications device, received across one of said plurality of wireless data networks from said second communications device, to a network protocol usable by said wireless communications device; and,
routing said in-bound data messages through said wireless communications device.

3. The method according to claim 1, wherein the selection of one of said plurality of wireless data networks is based on the highest difference between said radio frequency measurement taken from each one of said plurality of wireless data networks and said given radio frequency threshold for each one of said plurality of wireless data networks.

4. The method according to claim 1, wherein the selected one of said plurality of wireless data networks is based on a user preferred one of said plurality of wireless data networks when said continual radio frequency measurement from said user preferred one of said plurality of wireless data networks exceeds said given radio frequency threshold.

5. The method according to claim 1, wherein the selected one of said plurality of wireless data networks is based on which of said plurality of wireless data networks provides the greatest difference between said continual radio frequency measurement over its associated given radio frequency threshold when the continual radio frequency measurement for said user preferred one of said plurality of wireless data networks does not exceed said predetermined radio frequency threshold.

6. The method according to claim 2, further including the steps of:
extracting user data from a network frame of said out-bound data message received by said protocol converter from an end processor of said wireless communications device, placing said user data into a network frame of converted user data usable by the selected one of said plurality of wireless data networks, and transmitting the converted user data to the selected one of said plurality of wireless data networks; and
extracting user data from a network frame of said data message in-bound, placing said user data into a network frame of converted user data usable by said end processor, and transmitting the converted user data to said end processor.

7. The method according to claim 1, wherein said protocol converter includes a controller for performing the comparison of said continual radio frequency measurements to said predetermined radio frequency threshold.

8. The method according to claim 1, wherein the selected one of said plurality of wireless data networks is adapted to support a plurality of wireless communications devices, each one of said plurality of wireless communications devices using different air-interface protocols.

9. The method according to claim 2, wherein for said data messages outbound the network protocol usable by said wireless communications device for wireless communications is a cellular digital packet data and the network protocol usable by said another communications device is an automatic train control system; and for said data messages in-bound the network protocol usable by said wireless communications device for wireless communications is cellular digital packet data and the network protocol usable by an end processor coupled to said protocol converter is an automatic train control system.

10. The method according to claim 1, wherein said continual radio frequency measurements from said plurality of wireless data networks are cellular digital packet data and automatic train control system, and the selected one of said plurality of wireless data networks is cellular digital packet data.

11. A wireless communications device adapted to select an optimum wireless data network from a plurality of wireless data networks for wireless communications with a second communications device, said device comprising:
an end processor for processing data messages having a selected network protocol;
CHARACTERIZED BY:
one or more modem devices for receiving continual radio frequency measurements from said plurality of wireless data networks; and,
a protocol converter coupled to said end processor and said one or more modem devices for comparing each of said continual radio frequency measurements from said plurality of wireless data networks to a given minimum radio frequency threshold for each of said networks, said protocol converter operable to select one of said plurality of wireless data networks for wireless communications based on a comparison of each of said continual radio frequency measurements with said given minimum radio frequency threshold.

12. The wireless communications device according to claim 11, wherein said protocol converter is operable to convert out-bound data messages from said end processor to a network air interface protocol of the requested one of said plurality of wireless data networks and route said out-bound data messages to said modem devices for wireless communications across the requested one of said plurality of wireless data networks;
said protocol converter being further operable to convert in-bound data messages to said wireless communications device, received from the requested one of a plurality of wireless data networks to a network protocol usable by said end processor, and route said in-bound data messages from the requested one of said plurality of wireless data networks to said end processor.

13. The wireless communications device according to claim 11, wherein said protocol converter is adapted to request one of said plurality of wireless data networks based on the greatest difference between said radio frequency measurement taken from each one of said plurality of wireless data networks and said given radio frequency threshold for said each one of said plurality of wireless data networks.

14. The device according to claim 11, wherein said protocol converter is operable to select one of said plurality of wireless data networks based on a user preferred one of said plurality of wireless data networks when said continual radio frequency measurement from said user preferred one of said plurality of wireless data networks exceeds said given radio frequency threshold.

15. The device according to claim 11, wherein said protocol converter is operable to select one of said plurality of wireless data networks based on which of said plurality of wireless data networks provides the greatest difference between said continual radio frequency measurement over its associated given radio frequency threshold when the continual radio frequency measurement for said user preferred one of said plurality of wireless data networks does not exceed said predetermined radio frequency threshold.

16. The wireless communications device according to claim 12, wherein said protocol converter further includes:
means for extracting user data from a network frame of said out-bound data message received from said end processor, placing said user data into a network frame of converted user data usable by the selected one of said plurality of wireless data networks, and transmitting the converted user data to the selected one of said plurality of wireless data networks; and
means for extracting user data from a network frame of said in-bound data message received from said modem devices, placing said user data into a network frame of converted user data usable by said end processor, and transmitting the converted user data from said modem means to said end processor.

17. The wireless communications device according to claim 11, wherein said protocol converter includes a configuration and control circuit for performing the comparison of said continual radio frequency measurements to said predetermined radio frequency threshold.

18. The wireless communications device according to claim 11, wherein the selected one of said plurality of wireless data networks is adapted to support a plurality of wireless communications devices using a different air-interface protocol.

19. The wireless communications device according to claim 12, wherein the network protocol used by said end processor is an automatic train control system, the network protocol used by the selected one of said plurality of wireless data networks for wireless communications is cellular digital packet data, and the network protocol usable by said second communications device is automatic train control system.
